# DEMANDE DE BREVET EUROPEEN

(11) **EP 0 748 966 A1**
(43) Date de publication de la demande: **18.12.1996**
(21) Numéro de dépôt: 96401296.7
(22) Date de dépôt: 14.06.1996
(51) Int. Cl.: F16H 63/36, F16H 63/38

(54) **Dispositif de verrouillage pour boîte de vitesses mécanique**

(30) Priorité: 16.06.1995 FR 9507180
(71) Demandeur: Société Anonyme dite: REGIE NATIONALE DES USINES RENAULT, 92109 Boulogne Billancourt (FR)
(72) Inventeur: Prenel, Jean-Marc, 78730 St-Arnoult-en-Yvelines (FR); Raoul, Michel, 78990 Elancourt (FR)

(57) **Abrégé**

Dispositif de verrouillage des axes de fourchette (11) d'une boîte de vitesses mécanique comportant des moyens d'immobilisation axiale de deux axes de fourchette vis-à-vis du carter lorsque le troisième est déplacé à l'écart de sa position de point mort, caractérisé en ce qu'il regroupe un ensemble de billes (7) repoussées par des ressorts (6) dans des encoches de billage (8) des axes de fourchettes (11), de façon à retenir ces derniers en position de point mort ou de vitesse engagée.

## Description

La présente invention concerne la commande interne des boîtes de vitesses mécaniques. Plus précisément, elle a pour objet un dispositif de verrouillage visant à immobiliser en translation les axes de fourchette qui ne sont pas sollicités lors d'un passage de vitesse.

Dans les boîtes de vitesses mécaniques, on distingue habituellement deux fonctions distinctes, le billage et le verrouillage. La première consiste à retenir axialement les axes de fourchette dans des positions déterminées correspondant au point mort ou à des vitesses engagées. Cette fonction est généralement assurée par la coopération de billes repoussées élastiquement en direction des axes de fourchette, et d'encoches marquant sur ces derniers les positions de point mort et de vitesse engagée.

Selon une disposition connue, illustrée notamment par la publication FR-2.675.853, la bille et le ressort peuvent être retenus dans une cartouche, facilitant le montage de ces éléments dans la boîte de vitesses.

La fonction de verrouillage, relative à l'immobilisation temporaire en position de point mort, des axes de fourchette qui ne sont pas sollicités lors d'un passage de vitesse, a pour but d'éviter que deux vitesses ne soient engagées simultanément. Selon l'état de la technique connue, cette fonction peut être assurée de diverses façons.

La publication EP-0.170.630 décrit notamment un système de verrouillage adapté à la disposition de trois axes de fourchette sensiblement dans un même plan. Ce système comporte un disque traversant l'axe central et venant en contact par deux bords opposés avec deux éléments d'arrêt en appui par leurs autres extrémités contre les deux axes de fourchette latéraux. Ces éléments d'arrêt sont reçus dans une encoche de verrouillage de chacun des axes latéraux, le diamètre du disque étant tel, qu'au point mort, les deux encoches, le disque et les deux éléments d'arrêt sont alignés tout en pouvant débattre sur leur alignement, tandis que lorsqu'un des trois axes de fourchette est déplacé axialement, les deux autres axes sont immobilisés par le disque et les éléments d'arrêt.

Un autre système de verrouillage connu, adapté à une disposition en triangle des trois axes de fourchette, consiste à ménager une encoche de verrouillage dans chacun des trois axes de fourchette, ces trois encoches se faisant face lorsque la boîte de vitesses est au point mort. Un disque métallique, disposé entre les trois axes et prisonnier du carter, a un diamètre tel qu'il est repoussé dans les encoches de deux des axes par le troisième, lorsque celui-ci se déplace axialement à l'écart de sa position de point mort.

Les deux systèmes de verrouillage évoqués ci-dessus ont pour point commun qu'ils se limitent à assurer la fonction de verrouillage, tandis que des moyens de billage sont prévus en un lieu différent des axes de fourchette.

La présente invention vise à simplifier le montage et l'agencement des organes de billage et de verrouillage d'une boîte de vitesses mécanique.

Elle concerne un dispositif de verrouillage des axes de fourchette d'une boîte de vitesses mécanique comportant des moyens d'immobilisation axiale de deux axes de fourchette vis-à-vis du carter lorsque le troisième est déplacé à l'écart de sa position de point mort. Ce dispositif est caractérisé en ce qu'il regroupe un ensemble de billes repoussées par des ressorts dans des encoches de billage des axes de fourchettes, de façon à retenir ces derniers en position de point mort ou de vitesse engagée.

De façon avantageuse ce dispositif comporte trois cartouches disposées en triangle entre les axes de fourchettes, retenant des éléments de billage des axes de fourchette.

Selon un mode de réalisation particulier de l'invention, chaque fourreau renferme une entretoise centrale disposée entre deux billes repoussées en direction de deux axes de fourchette par un ressort.

Selon un autre mode de réalisation particulier de l'invention, le verrouillage des axes de fourchettes est assuré par un disque disposé entre les axes de fourchette en regard d'une encoche de verrouillage de chacun d'eux, et de dimension telle qu'il est repoussé au fond de deux d'entre elles lorsqu'un des axes de fourchette est déplacé à l'écart de sa position de point mort.

D'autres caractéristiques et avantages de l'invention apparaîtront clairement à la lecture de la description suivante de deux modes de réalisation préférentiels de celle-ci, en liaison avec les dessins annexés sur lesquels :
- les figures 1, 2 et 3 se rapportent à l'art antérieur,
- les figures 4 et 5A à 5D illustrent un premier mode de réalisation de l'invention, et
- les figures 6 et 7A à 7E illustrent un second mode de réalisation de l'invention, les figures 7B et 7C étant respectivement un agrandissement partiel et un coup selon A-A de la figure 7A, tandis que les figures 7D et 7E sont deux coupes selon B-B de la figure 7C correspondant respectivement à une position de point mort et de vitesse engagée, et que la figure 7A est elle-même une coupe selon C-C de la figure 7C.

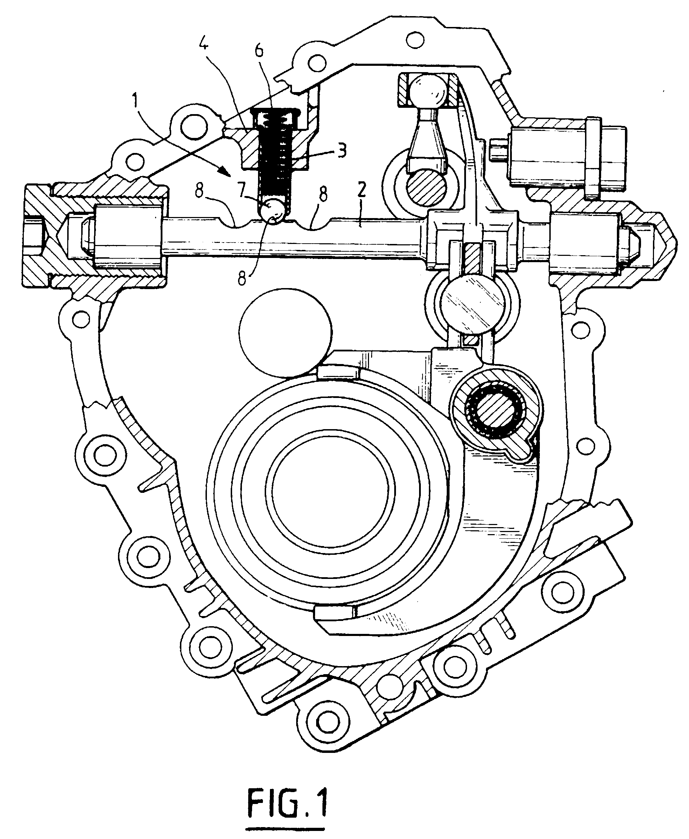

Sur la figure 1, montrant en coupe un mécanisme de commande interne de boîte de vitesses, on a fait apparaître un système de billage de type connu 1, centralisé sur l'axe de commande interne 2 de la boîte. Ce système est constitué d'une cartouche 3 immobilisée dans le carter 4 de la boîte, qui renferme un ressort 6 et une bille 7 coopérant sous la poussée du ressort 6 avec des encoches 8 de l'axe 2, pour retenir ce dernier en position de point mort (encoche centrale), ou en positon de vitesse engagée (encoches latérales). Comme indiqué plus haut, le préassemblage de la bille 7 et du ressort 6 dans la cartouche facilite le montage du système dans la boîte de vitesses.

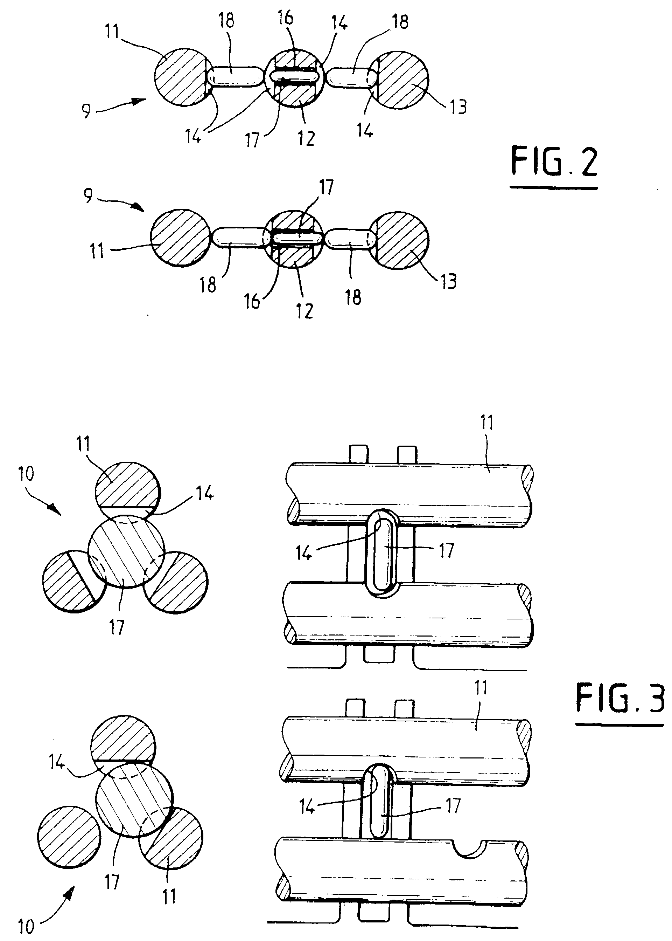

La figure 2 décrit sommairement un système de verrouillage 9 pour boîte de vitesses à trois axes de fourchette alignés 11, 12, 13, selon lequel l'axe de fourchette central 12 présente deux encoches de verrouillage symétriques 14 réunies par un trou 16 au travers de laquelle un élément, ou "bonhomme" de verrouillage 17 peut se déplacer sous la poussée de l'un ou l'autre de deux éléments d'arrêt 18 engagés par une extrémité dans une encoche de verrouillage 14 des axes de fourchette latéraux 13.

Enfin, un autre système de verrouillage connu 10, destiné aux axes de fourchettes disposés en triangle, est illustré par la figure 3. Ce système comporte un disque central de verrouillage 17 immobilisé vis-à-vis du carter, et pouvant pénétrer dans une encoche de verrouillage de chaque axe de fourchette. Etant donné que les trois encoches de verrouillage du système se font face, lorsque la boîte de vitesse est au point mort, et que le diamètre du disque 17 est choisi de façon à libérer une encoche de verrouillage 14 lorsqu'il est complètement engagé dans les deux autres, le disque 17 assure l'immobilisation de deux axes de fourchettes, dès que le troisième est écarté de sa position de point mort.

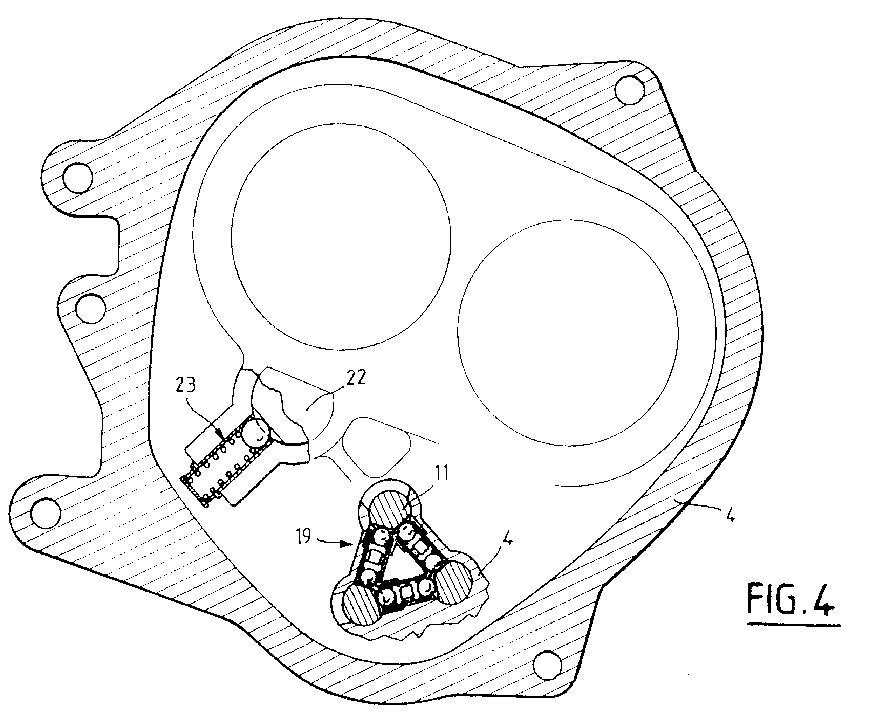

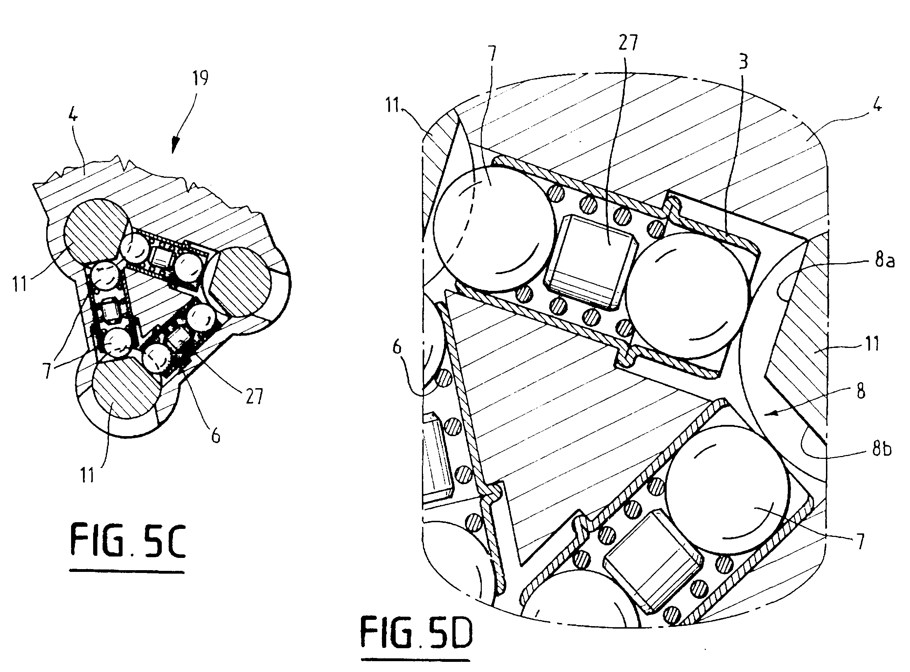

Les deux modes de réalisation préférentiels, mais non limitatifs de l'invention, décrits ci-dessous s'appliquent au verrouillage de trois axes de fourchette disposés en triangle. Le dispositif de verrouillage 19, illustré par les figures 4 et 5A à 5D comporte trois cartouches 3 logées à l'intérieur du carter 4 et orientées transversalement aux axes de fourchette 11, comme l'indique la figure 4 sur laquelle on a également fait apparaître l'axe de marche arrière 22 de la boîte et son propre système de billage 23, qui est indépendant du dispositif de verrouillage 19 proposé.

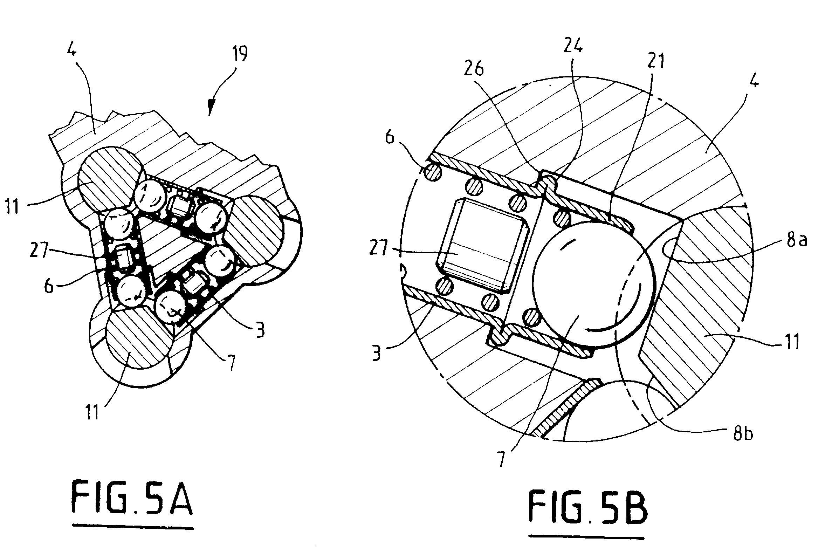

En se reportant aux figures 5A et 5B, on voit que chaque cartouche 3 est en appui par un rebord 24 contre un épaulement 26 du carter 4, et renferme une entretoise centrale 27 entourée par un ressort 6 qui repousse deux billes 7 disposées de part et d'autre de l'entretoise 27, en direction des extrémités de la cartouche 21.

Chaque axe de fourchette 11 comporte trois encoches de billage 8 (dont l'une apparaît dans le plan de coupe des figures), correspondant respectivement au point mort et aux deux vitesses que cet axe permet d'engager. Chaque encoche de billage 8 présente deux pans latéraux 8a, 8b contre lequel repose une bille 7 d'une cartouche adjacente 3. En position de point mort ou de vitesse engagée (cf fig.5A) les six billes 7 du dispositif sont engagées deux par deux dans une encoche 8 de chaque axe 11, et maintenues élastiquement dans celle-ci par les ressorts 3, assurant ainsi le billage des axes de fourchette 11.

Par ailleurs, lorsqu'un axe de fourchette 11 de la boîte de vitesses est écarté d'une position de point mort ou de vitesse engagée, cet axe repousse les deux billes 7 en appui contre lui hors de son encoche de billage 8, de sorte que les deux billes opposées 7 de la cartouche 3 concernée sont repoussées par l'intermédiaire des ressorts 6 et des entretoises 27 au fond des encoches des deux autres axes, empêchant ainsi ces derniers de s'écarter de leur position. Le dispositif proposé assure donc également la fonction de verrouillage des axes de fourchette non sollicités lors d'un passage de vitesses.

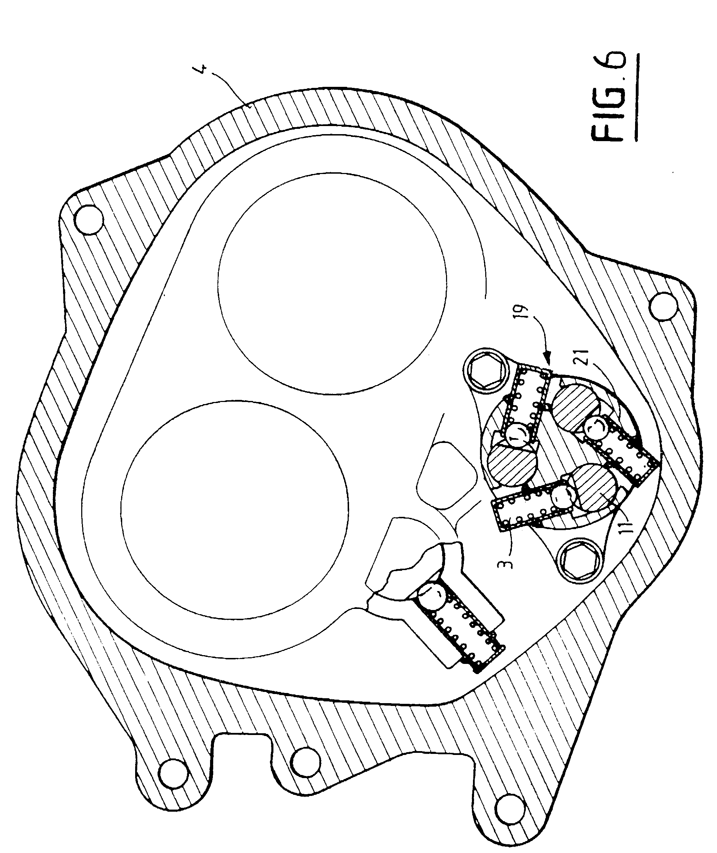

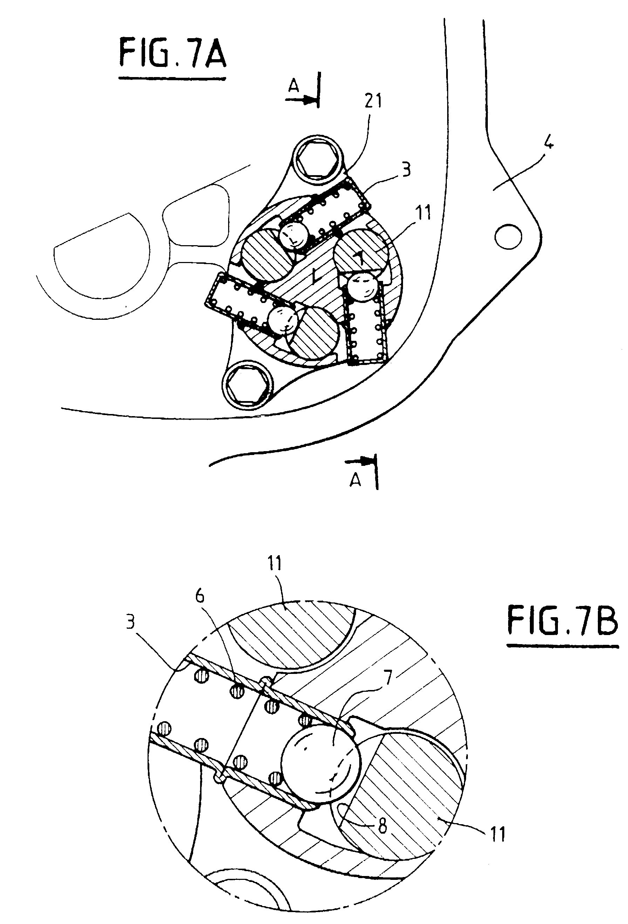

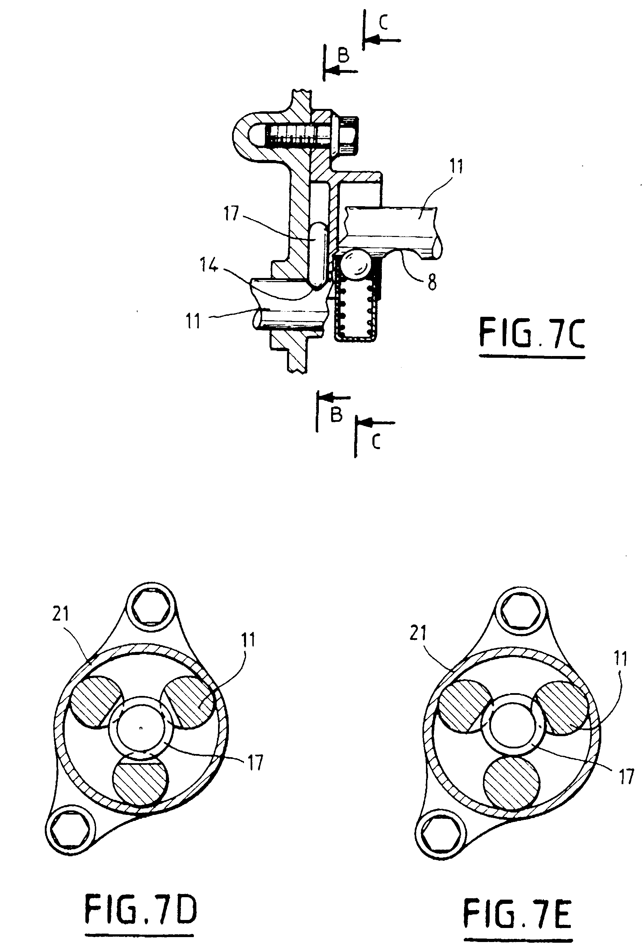

Le dispositif de verrouillage 19 illustré par les figures 6 à 7E, correspondant à un second mode de réalisation de l'invention, regroupe également des moyens de billage et des moyens de verrouillage des axes de fourchette 11. Il se compose d'un boîtier 21 vissé sur le carter 4, renfermant un disque de verrouillage 17 entouré par trois cartouches de billage 3, en appui sur chacun des axes de fourchette 11.

Les cartouches de billage 3 retiennent une bille 7 repoussée élastiquement par un ressort 6 en direction d'un axe de fourchette 11, de sorte que la coopération de chaque cartouche 3 avec les trois encoches de billage 8 de chaque axe permet d'arrêter axialement ces derniers dans des positions définies de point mort et de deux vitesses engagées.

Par ailleurs, chaque axe de fourchette 11 présente une encoche de verrouillage 14 recevant un disque de verrouillage central 17, dont le diamètre est tel que lors du déplacement d'un premier axe de fourchette 11 à l'écart de sa position de point mort il est repoussé au fond des encoches de verrouillage 14 des deux autres axes 11 par ce premier axe. Le disque 17' étant immobilisé axialement dans son boîtier 21, il assure donc automatiquement le verrouillage des axes de fourchette 11 non sollicités.

Le boîtier 21 peut avantageusement être vissé sur le carter après le montage de la pignonnerie et du mécanisme de commande interne de la boîte, son centrage étant assuré par les axes de fourchette 11.

L'invention permet donc de regrouper dans un dispositif préassemblé les organes de billage et de verrouillage d'une boîte de vitesses mécanique. Ces dispositions simplifient d'une manière très appréciable le montage des éléments de commande de celle-ci.

## Revendications

1. Dispositif de verrouillage des axes de fourchette (11) d'une boîte de vitesses mécanique présentant des moyens d'immobilisation axiale de deux axes de fourchette vis-à-vis du carter lorsque le troisième est déplacé à l'écart de sa position de point mort, caractérisé en ce qu'il comporte trois cartouches de billage (3) disposées en triangle entre les axes de fourchettes (11), de façon à retenir ces derniers en position de point mort ou de vitesse engagée.

2. Dispositif de verrouillage selon la revendication 1, caractérisé en ce que chaque cartouche (3) renferme une entretoise centrale (27) disposée entre deux billes (7) repoussées en direction de deux axes de fourchette (11) par un ressort (6).

3. Dispositif de verrouillage selon la revendication 1 ou 2, caractérisé en ce que chaque encoche de billage (8) présente deux pans inclinés (8a, 8b) recevant chacune une bille (7) d'une cartouche adjacente (21).

4. Dispositif de verrouillage selon la revendication 2 ou 3, caractérisé en ce que chaque cartouche (3) participe par ses extrémités au billage de deux axes de fourchette (11), et en ce que le déplacement d'un axe (11) à l'écart d'une position de point mort ou de vitesse engagée entraîne l'immobilisation axiale des deux arbres axes (11) par les billes repoussées (7) au fond des encoches de billage (8) de ces derniers.

5. Dispositif de verrouillage selon la revendication 1, caractérisé en ce que le verrouillage des axes de fourchettes (11) est assuré par un disque (17) disposé entre les axes de fourchette (11) en regard d'une encoche de verrouillage (14) de chacun d'eux, et de dimension telle qu'il est repoussé au fond de deux d'entre elles lorsqu'un des axes de fourchette (11) est déplacé à l'écart de sa position de point mort.

6. Dispositif de verrouillage selon la revendication 5, caractérisé en ce que le disque de verrouillage (17) et les cartouches (3) sont assemblés dans un boîtier (21) vissé sur le carter de la boîte de vitesses.

7. Dispositif de verrouillage selon la revendication 5 ou 6, caractérisé en ce que chaque cartouche (3) retient une bille (7) repoussée par un ressort (6) en direction d'un axe de fourchette (11).

8. Dispositif de verrouillage selon la revendication 6 ou 7, caractérisé en ce que le boîtier (21) est centré dans le carter (4) par les axes de fourchette (11).
